# EUROPÄISCHE PATENTSCHRIFT

(11) **EP 4 190 599 B1**
(45) Veröffentlichungstag und Bekanntmachung des Hinweises auf die Patenterteilung: **30.04.2025**
(21) Anmeldenummer: 22211265.8
(22) Anmeldetag: 02.12.2022
(51) Int. Cl.: B60C 23/04

(54) **VERFAHREN ZUM DETEKTIEREN EINER BESCHÄDIGUNG AN EINEM FAHRZEUGREIFEN**
METHOD FOR DETECTING DAMAGE TO A VEHICLE TYRE
PROCÉDÉ DE DÉTECTION D'UN DOMMAGE SUR UN PNEU DE VÉHICULE

(30) Priorität: 06.12.2021 DE 102021213835
(43) Veröffentlichungstag der Anmeldung: 07.06.2023
(73) Patentinhaber: Continental Reifen Deutschland GmbH, 30175 Hannover (DE)
(72) Erfinder: Sahlmüller, Baldo, 30165 Hannover (DE); Kurz, Martin, 30165 Hannover (DE); Gläser, Frank, 30165 Hannover (DE); Wilhelmsen, Sven, 30165 Hannover (DE)
(74) Vertreter: Continental Corporation

(56) Entgegenhaltungen:
- EP-A1- 1 889 736
- EP-A1- 2 818 338
- EP-A2- 1 813 447

## Beschreibung

Die Erfindung betrifft ein Verfahren sowie eine Vorrichtung zum Detektieren einer Beschädigung an einem Fahrzeugreifen. Eine Beschädigung an einem Fahrzeugreifen kann zu einem relativ langsamen Verlust von Luft aus dem Fahrzeugreifen und somit zu einem langsamen Druckabfall führen.

Verfahren zum Detektieren von schleichenden Druckverlusten an Fahrzeugreifen ist sind bekannt. Bei solchen Verfahren wird aus gespeicherten Reifendruckwerten eines Reifendrucksensors eine Kurvensteigung ermittelt, die den Druckverlust pro Zeiteinheit wiedergibt. Weicht die ermittelte Kurvensteigung ausreichend von einer vorgegebenen Kurvensteigung ab, wird eine Warnmeldung ausgegeben.

Aus der EP 1 813 447 A2 ist ein System zum Überwachen eines Reifendrucks bekannt mit einem Reifendrucksensor und einem Transmitter sowie einem Receiver, damit ein Reifendrucksignal in einer Recheneinheit verarbeitet werden kann und ein Warnsignal ausgeben kann. Das Warnsignal wird beim Detektieren einer Beschädigung ausgegeben, selbst wenn der Druckverlust nicht weiter voranschreitet, da die Beschädigung durch das Wirken einer Reparaturflüssigkeit zu keinem weiteren Druckverlust führt.

Die EP 2 818 338 A1 offenbart ein System zum Erkennen des Platzen eines Reifens mit einem Reifendrucksensor sowie einem Reifendruckmonitor, der beim Platzen eines Reifens das Platzen des Reifens mittels einer binären Anzeigevorrichtung anzeigt und eine Anzeige eines Reifens mit geringem Druck verhindert.

Aus der EP 1 889 736 A1 ist ein Reifenüberwachungssystem mit einer Reifenüberwachungseinheit und einer zentralen Steuereinheit bekannt. Die zentrale Steuereinheit sendet Sprachangabebefehle und Bremsverzögerungsbefehle an eine Sprachangabeneinheit und einen Bremsverzögerungsmechanismus in Abhängigkeit der Signale der Reifenüberwachungseinheit.

Vor diesem Hintergrund liegt der Erfindung die Aufgabe zugrunde, ein Verfahren sowie eine Vorrichtung zum Detektieren einer Beschädigung an einem Fahrzeugreifen zu verbessern, so dass eine Beschädigung an einem Fahrzeugreifen frühzeitig erkannt wird.

Diese Aufgabe wird gelöst mit einem Verfahren gemäß den Merkmalen des Patentanspruches 1 sowie einer Vorrichtung gemäß dem nebengeordneten Anspruch. Die Unteransprüche betreffen besonders zweckmäßige Weiterbildungen der Erfindung.

Erfindungsgemäß ist also ein Verfahren zum Detektieren einer Beschädigung an einem Fahrzeugreifen mit den folgenden Schritten vorgesehen:
a) Erfassen von einzelnen Reifendruckwerten des Fahrzeugreifens mit einem Reifendrucksensor,
b) Vergleichen des Reifendruckwertes mit einem unteren Schwellwert,
c) Initiieren einer Warnmeldung, wenn einer der Reifendruckwerte unter einen unteren Schwellwert fällt,
wobei der Zeitpunkt der Initiierung der Warnmeldung oder das Überschreiten eines oberen Schwellwertes als ein erster Zeitpunkt auf einem Datenspeicher gespeichert wird. Folgend wird ein zweiter Zeitpunkt erfasst, aufgrund des Fallens einer der Reifendruckwerte des Fahrzeugreifens unter einen unteren Schwellwert. Der zweite Zeitpunkt wird mit dem ersten Zeitpunkt verglichen, wobei eine Beschädigungsmeldung initiiert wird, wenn ein Vergleich des ersten Zeitpunkts mit dem zweiten Zeitpunkt eine Zeitdifferenz kleiner als eine vorbestimmte minimale Zeitdifferenz ergibt.

Das Initiieren einer Warnmeldung ist ungleich einem wiederholten Ausgeben oder Anzeigen der gleichen Warnmeldung, aufgrund eines sich stetig unterhalb eines Schwellwertes liegenden Reifendruckwertes. Ein Initiieren einer Warnmeldung wird nur ausgeführt, wenn der Reifendruckwert zuvor oberhalb des unteren Schwellwertes und folgend unterhalb des unteren Schwellwertes liegt.

In einer vorteilhaften Ausführungsform wird keine Beschädigungsmeldung ausgegeben, soweit der Reifendruckwert nach dem ersten Zeitpunkt den oberen Schwellwert nicht überschritten hat, wobei der obere Schwellwert bevorzugt zumindest 0,5 bar höher ist als der untere Schwellwert. Entspricht der erste Zeitpunkt dem Zeitpunkt des Überschreitens des oberen Schwellwertes, wird also stets eine Beschädigungsmeldung ausgegeben, wenn die Zeitdifferenz bis zum Unterschreiten des unteren Schwellwertes kleiner als die vorbestimmte minimale Zeitdifferenz ist.

Entspricht der erste Zeitpunkt dem Zeitpunkt des Unterschreitens des unteren Schwellwertes wird keine Beschädigungsmeldung ausgegeben, wenn zwischenzeitig der Reifendruckwert den oberen Schwellwert nicht überschritten hat. Hierdurch wird ein Ausgeben einer Beschädigungsmeldung durch ein Alternieren des Reifendruckwertes um den unteren Schwellwert vermieden.

Eine weitere vorteilhafte Weiterbildung erfasst eine Fahrzeugreifentemperatur und führt eine Temperaturkompensation der Reifendruckwerte durch. Hierdurch werden die Schwankungen der Reifendruckwerte aufgrund von Temperaturschwankungen des Reifens vermieden. Ein Alternieren des Reifendruckwertes um den unteren Schwellwert wird vermieden, ein zweiter Schwellwert bei der Ermittlung einer Reifenbeschädigung kann entfallen. Jedes Unterschreiten des unteren Schwellwertes führt zu der Ausgabe einer Warnmeldung beziehungsweise einer Beschädigungsmeldung.

In einer weiteren vorteilhaften Ausführungsform wird der erste Zeitpunkt sowie bevorzugt auch weitere ermittelte Daten auf einem sich an einem Fahrzeug befindenden Datenspeicher, bevorzugt in dem Fahrzeugreifen, gespeichert. Hierdurch kann ein Übertragen des ersten Zeitpunkts an einen fahrzeugexternen Datenspeicher entfallen. Bevorzugt kann auch das Übertragen an von einer sich im Reifen befindenden Vorrichtung zum Fahrzeug entfallen, wodurch die zum Übermitteln benötigte Energie eingespart werden kann.

In einer weiteren vorteilhaften Ausführungsform wird der erste Zeitpunkt sowie bevorzugt auch weitere ermittelte Daten auf einem zentralen Datenspeicher außerhalb des Fahrzeugs gespeichert. Ein Speichern auf einem zentralen Datenspeicher ermöglicht es, die im Reifen befindliche Einheit ohne einen Datenspeicher auszuführen, wodurch dieser besonders klein, leicht und günstig in der Herstellung ist. Weiterhin kann in einfacher Form eine zentrale Auswertung der Daten erfolgen und in einfacher Form ein Ausgeben einer Beschädigungsmeldung, beispielweise an einen Flottenbetreiber, ermöglicht werden.

Eine weitere bevorzugte Ausführungsform sieht vor, dass der Vergleich des ersten Zeitpunkts mit dem zweiten Zeitpunkt und oder aber alternativ das Initiieren der Beschädigungsmeldung am Fahrzeug, bevorzugt auf einem sich in dem Fahrzeugreifen befindenden Reifendruckkontrollsystem, erfolgt. Eine Datenübermittlung an einen zentralen Datenspeicher kann hierdurch entfallen. Bevorzugt kann auch die Datenübertragung vom Fahrzeugreifen an das Fahrzeug minimiert werden, da nur noch Daten übertragen werden müssen, wenn eine Warnmeldung oder Beschädigungsmeldung ausgegeben wird.

In einer weiteren vorteilhaften Ausführungsform erfolgt der Vergleich des ersten Zeitpunkts mit dem zweiten Zeitpunkt und das Initiieren der Beschädigungsmeldung auf einem zentralen Rechner. Die im Reifen sowie die im Fahrzeug befindlichen Einheiten können besonders klein, leicht und günstig in der Herstellung realisiert werden.

Eine weitere bevorzugte Ausführungsform sieht vor, dass der erste Zeitpunkt und der zweite Zeitpunkt und oder alternativ die Warnmeldungen und Beschädigungsmeldungen vom Reifendrucksensor kabellos, bevorzugt mittels Funkübertragung, weiter bevorzugt mittels Bluetooth, an ein Steuergerät des Fahrzeugs ausgegeben werden. Eine kabellose Übertragung ist bei rotierenden Komponenten wie Fahrzeugreifen besonders einfach realisierbar. Eine Übertragung über Funk oder Bluetooth ermöglichen eine besonders günstige und zuverlässige Übertragung.

Eine weitere bevorzugte Ausführungsform sieht vor, dass der erste Zeitpunkt und der zweite Zeitpunkt und oder alternativ die Warnmeldungen und Beschädigungsmeldungen vom Reifendrucksensor kabellos, bevorzugt über ein Mobilfunknetz, an einen zentralen Rechner außerhalb des Fahrzeugs übertragen werden. Hierdurch kann auf eine Installation eines Steuergeräts am Fahrzeug verzichtet werden, wodurch diese Ausführungsform kleiner, leichter und günstiger herstellbar wird.

**In** einer weiteren vorteilhaften Weiterbildung beträgt die vorbestimmte minimale Zeitdifferenz einen Monat, bevorzugt zwei Wochen, weiter bevorzugt eine Woche und weiter bevorzugt drei Tage. Je größer die vorbestimmte minimale Zeitdifferenz ist, desto langsamere Druckverluste werden als Reifenbeschädigung erkannt. Die Häufigkeit von falschen oder unnötigen Beschädigungsmeldungen wird durch eine große vorbestimmte minimale Zeitdifferenz jedoch erhöht. Abhängig vom Fahrzeugreifen und seiner Nutzung variieren die Druckverlustraten. Somit sind für einige Fahrzeugreifen und Nutzungen größere vorbestimmte minimale Zeitdifferenzen vorteilhaft, für andere kleinere vorbestimmte minimale Zeitdifferenzen. Weiter vorteilhaft ist es daher, wenn die vorbestimmte minimale Zeitdifferenz an Fahrzeugreifen und seine Nutzung angepasst wird. Dies kann bevorzugt durch einen lernenden Algorithmus erfolgen, der anhand von vorherigen Druckverlusten eine vorbestimmte minimale Zeitdifferenz ermittelt.

Eine weitere bevorzugte Ausführungsform sieht vor, dass eine Beschädigungsmeldung initiiert wird bei einem mehrfachen Vorkommen der Zeitdifferenz, wobei die Zeitspanne zwischen den Zeitdifferenzen kleiner als drei Monate, bevorzugt kleiner als zwei Monate, weiter bevorzugt kleiner als einen Monat und weiter bevorzugt kleiner als zwei Wochen ist. Es wird die Wahrscheinlichkeit von unnötigen Beschädigungsmeldungen vermieden, wobei auch kleinere Beschädigungen weiterhin mit hoher Sicherheit erkannt werden.

Eine einmalig erhöhte Druckverlustrate, die beispielweise durch eine intensive Nutzung bedingt sein kann, wird nicht als Beschädigungsmeldung ausgegeben, da die vorbestimmte minimale Zeitdifferenz klein gewählt werden kann. Führt eine kleine Beschädigung jedoch wiederholt zu einer erhöhten Druckverlustrate, führt dies zu einem häufigeren Ausgeben einer Warnmeldung, so dass eine Beschädigungsmeldung ausgegeben wird, ohne dass der Druckverlust so groß sein muss, dass er zu einer Zeitdifferenz führt, die kleiner als die vorbestimmte minimale Zeitdifferenz ist. Abhängig von dem Fahrzeugreifen und seiner Nutzung ist eine längere oder eine kürzere Zeitspanne vorteilhaft, wie es bereits zur vorbestimmten minimalen Zeitdifferenz ausgeführt wurde.

In einer weiteren vorteilhaften Weiterbildung wird die Beschädigungsmeldung automatisiert an einen Flottenbetreiber und oder alternativ an einen Fahrzeughalter ausgegeben. Die automatisierte Ausgabe stellt sicher, dass der Flottenbetreiber oder Fahrzeughalter unmittelbar über die Beschädigung informiert wird und einen Service einplanen kann sowie an Fahrer entsprechende Weisungen rausgeben kann. Die Ausgabe kann beispielweise per E-Mail erfolgen.

Eine weitere bevorzugte Ausführungsform sieht vor, dass die Häufigkeit der Warnmeldungen des Fahrzeugreifens mit der Häufigkeit der Warnmeldungen von weiteren Fahrzeugreifen des gleichen Fahrzeuges verglichen wird, wobei bei einer Abweichung der Häufigkeiten um mehr als den Faktor 5, bevorzugt um mehr als den Faktor 3, weiter bevorzugt um mehr als den Faktor 2 und weiter bevorzugt um mehr als den Faktor 1,5 eine Beschädigungsmeldung initiiert wird.

Es wird die Detektion von Beschädigungen, die lediglich zu einer kleinen Druckverlustrate führen, ermöglicht, wobei die Wahrscheinlichkeit von unnötigen Beschädigungsmeldungen gering ist. Die vorbestimmte minimale Zeitdifferenz kann klein gewählt werden, wodurch wenige unnötige Beschädigungsmeldungen ausgegeben werden. Geringe Erhöhungen der Druckverlustrate werden dennoch erkannt, wenn die Druckverlustrate um den entsprechenden Faktor höher ist als bei weiteren Fahrzeugreifen des Fahrzeugs. Eine erhöhte Druckverlustrate aufgrund einer intensiven Nutzung führt nicht zu unnötigen Beschädigungsmeldungen.

Erfindungsgemäß ist eine Vorrichtung zum Ausführen des erfindungsgemäßen Verfahrens vorgesehen. Die Vorrichtung weist ein Reifendruckkontrollsystem zum Ermitteln von Reifendruckwerten sowie eine Speichereinheit zum Speichern von Zeitpunkten, eine Sendeeinheit und eine Recheneinheit zum Ermitteln einer Beschädigung an einem Fahrzeugreifen auf. Das Reifendruckkontrollsystem zum Ermitteln von Reifendruckwerten sowie eine Sendeeinheit sind im Fahrzeugreifen angeordnet. Die Speichereinheit und die Recheneinheit können im Fahrzeug zum Beispiel im Fahrzeugreifen oder aber auch außerhalb des Fahrzeugs, beispielweise zentral für eine Vielzahl von Fahrzeugen, angeordnet sein.

Die Erfindung lässt zahlreiche Ausführungsformen zu. Zur Verdeutlichung ihres Grundprinzips sind zwei davon in den Zeichnungen dargestellt und werden nachfolgend beschrieben. Diese zeigen in
Fig. 1 ein schematisches Verfahren zum Detektieren einer Beschädigung an einem Fahrzeugreifen,
Fig. 2 einen Verlauf eines Reifendruckwertes über die Zeit.

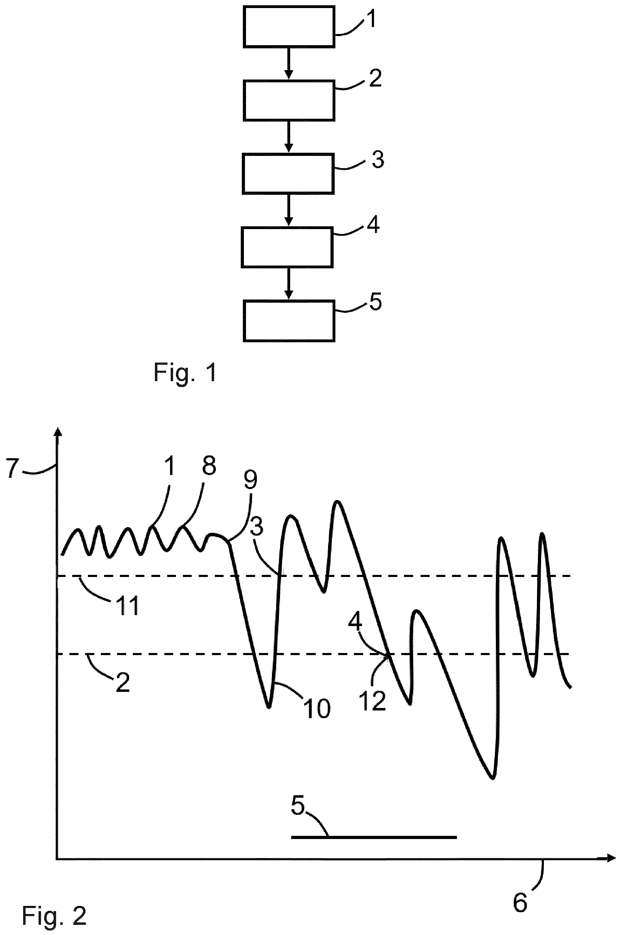

Figur 1 zeigt schematisch ein Verfahren zum Detektieren einer Beschädigung an einem Fahrzeugreifen, wobei ein Reifendruckwert 1 des Fahrzeugreifens wiederholt mit einem Reifendrucksensor erfasst und mit einem unteren Schwellwert 2 verglichen wird. Wird ein Reifendruckwert 1 erfasst, der unterhalb des unteren Schwellwert 2 liegt, wird eine Warnmeldung an einen Fahrzeugführer ausgegeben.

Der Zeitpunkt der Initiierung der Warnmeldung wird als ein erster Zeitpunkt 3 auf einem Datenspeicher des Fahrzeugs gespeichert. Es wird eine Temperaturkompensation des Reifendruckwertes 1 durchgeführt, so dass Temperaturschwankungen des Reifens nicht zu einer Änderung des Reifendruckwertes 1 führen. Der Reifendruckwert 1 ist somit keinen relevanten Schwankungen unterworfen und verbleibt bis zum Befüllen des Fahrzeugreifens unterhalb des unteren Schwellwertes 2.

Ein erneutes Unterschreiten des Reifendruckwertes 1 unter den unteren Schwellwert 2, also ein Reifendruckwert 1 unterhalb der unteren Schwelle 2, wobei der vorherige Reifendruckwert 1 oberhalb der unteren Schwelle 2 lag, tritt somit nur nach einem zwischenzeitigen Befüllen des Fahrzeugreifens auf. Der Zeitpunkt des erneuten Unterschreitens des unteren Schwellwertes 2 wird als zweiter Zeitpunkt 4 auf einem Datenspeicher des Fahrzeugs gespeichert. Es wird ein Vergleich des ersten Zeitpunkts 3 mit dem zweiten Zeitpunkt 4 durchgeführt, wobei eine Beschädigungsmeldung ausgegeben wird, wenn die zeitliche Differenz zwischen dem ersten Zeitpunkt 3 und dem zweiten Zeitpunkt 4 kleiner als eine vorbestimmte minimale Zeitdifferenz 5 ist. Die Beschädigungsmeldung wird an den Fahrzeugführer sowie per E-Mail an eine zentrale Recheneinheit ausgegeben.

In Figur 2 ist ein Verlauf des Reifendruckwertes 1 über die Zeit dargestellt. Auf der x-Achse 6 ist die Zeit aufgetragen, auf der y-Achse 7 der Reifendruck. Die Ausführungsform weist keine Temperaturkompensation des Reifendrucks auf, so dass die temperaturbedingten Schwankungen des Reifendruckwertes 1 als kleine und kurze Schwankungen dem Verlauf des Reifendruckwertes 1 überlagert sind.

In einem ersten Teilbereich 8 liegt ein beschädigungsfreier Fahrzeugreifen und somit ein nahezu konstanter Reifendruckwert 1 vor. Zum Beschädigungszeitpunkt 9 erfährt der Fahrzeugreifen eine Beschädigung, so dass folgend über die Dauer von mehreren Tagen der Reifendruckwert 1 unter den unteren Schwellwert 2 fällt. Dies wird durch das Erfassen des Reifendruckwertes 1 und einen Vergleich des Reifendruckwertes 1 mit dem unteren Schwellwert 2 ermittelt. Es wird eine Warnmeldung ausgegeben.

Eine Befüllung 10 des Fahrzeugreifens wird durchgeführt, so dass der Reifendruckwert 1 einen oberen Schwellwert 11 überschreitet. Dies wird durch einen Vergleich des oberen Schwellwertes 11 mit dem erfassten Reifendruckwert 1 ermittelt. Der Zeitpunkt des Überschreitens des oberen Schwellwertes 11 wird als erster Zeitpunkt 3 gespeichert.

Der Reifendruckwert 1 fällt folgend wieder ab und unterschreitet zum Zeitpunkt 12 den unteren Schwellwert 2. Dies wird durch einen Vergleich des unteren Schwellwertes 2 mit dem erfassten Reifendruckwert 1 ermittelt. Der Zeitpunkt 12 wird als zweiter Zeitpunkt 4 gespeichert und mit dem ersten Zeitpunkt 3 verglichen. Die Differenz zwischen dem zweiten Zeitpunkt 4 und dem ersten Zeitpunkt 3 wird mit der vorbestimmten minimalen Zeitdifferenz 5 verglichen. Der Vergleich ergibt, dass die vorbestimmte minimale Zeitdifferenz 5 größer ist als die Differenz zwischen dem zweiten Zeitpunkt 4 und dem ersten Zeitpunkt 3, so dass eine Beschädigungsmeldung ausgegeben wird.

### Bezugszeichenliste

- 1: Reifendruckwert
- 2: unterer Schwellwert
- 3: erster Zeitpunkt
- 4: zweiter Zeitpunkt
- 5: vorbestimmte minimale Zeitdifferenz
- 6: x-Achse
- 7: y-Achse
- 8: erster Teilbereich
- 9: Beschädigungszeitpunkt
- 10: Befüllung
- 11: obere Schwellwert
- 12: Zeitpunkt

## Patentansprüche

1. Verfahren zum Detektieren einer Beschädigung an einem Fahrzeugreifen mit mindestens den folgenden Schritten:
a) Erfassen von einzelnen Reifendruckwerten (1) des Fahrzeugreifens mit einem Reifendrucksensor,
b) Vergleichen des Reifendruckwertes (1) mit einem unteren Schwellwert (2),
c) Initiieren einer Warnmeldung, wenn einer der Reifendruckwerte (1) unter den unteren Schwellwert (2) fällt, **dadurch gekennzeichnet, dass** der Zeitpunkt der Initiierung der Warnmeldung oder des Überschreitens eines oberen Schwellwertes (11) als ein erster Zeitpunkt (3) auf einem Datenspeicher gespeichert wird, wobei folgend ein zweiter Zeitpunkt (4) erfasst wird, aufgrund des Fallens einer der Reifendruckwerte (1) des Fahrzeugreifens unter einen unteren Schwellwert (2), und mit dem ersten Zeitpunkt (3) verglichen wird, wobei eine Beschädigungsmeldung initiiert wird, wenn ein Vergleich des ersten Zeitpunkts (3) mit dem zweiten Zeitpunkt (4) eine Zeitdifferenz kleiner als eine vorbestimmte minimale Zeitdifferenz (5) ergibt.

2. Verfahren nach Anspruch 1, **dadurch gekennzeichnet, dass** keine Beschädigungsmeldung ausgegeben wird, soweit der Reifendruckwert (1) nach dem ersten Zeitpunkt (3) den oberen Schwellwert (11) nicht überschritten hat.

3. Verfahren nach den Ansprüchen 1 oder 2, **dadurch gekennzeichnet, dass** eine Fahrzeugreifentemperatur erfasst wird und eine Temperaturkompensation des Reifendruckwertes (1) durchgeführt wird.

4. Verfahren nach einem der vorangehenden Ansprüche, **dadurch gekennzeichnet, dass** der erste Zeitpunkt (3) auf einem sich an einem Fahrzeug befindenden Datenspeicher, bevorzugt in dem Fahrzeugreifen, gespeichert wird.

5. Verfahren nach einem der vorangehenden Ansprüche, **dadurch gekennzeichnet, dass** der erste Zeitpunkt (3) auf einem zentralen Datenspeicher außerhalb des Fahrzeugs gespeichert wird.

6. Verfahren nach einem der vorangehenden Ansprüche, **dadurch gekennzeichnet, dass** der Vergleich des ersten Zeitpunkts (3) mit dem zweiten Zeitpunkt (4) und/oder das Initiieren der Beschädigungsmeldung am Fahrzeug, bevorzugt auf einem sich in dem Fahrzeugreifen befindenden Reifendruckkontrollsystem, erfolgt.

7. Verfahren nach einem der Ansprüche 1 bis 5, **dadurch gekennzeichnet, dass** der Vergleich des ersten Zeitpunkts (3) mit dem zweiten Zeitpunkt (4) und das Initiieren der Beschädigungsmeldung auf einem zentralen Rechner erfolgt.

8. Verfahren nach einem der vorangehenden Ansprüche, **dadurch gekennzeichnet, dass** der erste Zeitpunkt (3) und der zweite Zeitpunkt (4) und/oder die Warnmeldungen und Beschädigungsmeldungen vom Reifendrucksensor kabellos, bevorzugt mittels Funkübertragung, weiter bevorzugt mittels Bluetooth, an ein Steuergerät des Fahrzeugs ausgegeben werden.

9. Verfahren nach einem der Ansprüche 1 bis 7, **dadurch gekennzeichnet, dass** der erste Zeitpunkt (3) und der zweite Zeitpunkt (4) und/oder die Warnmeldungen und Beschädigungsmeldungen vom Reifendrucksensor kabellos, bevorzugt über ein Mobilfunknetz, an einen zentralen Rechner ausgegeben werden.

10. Verfahren nach einem der vorangehenden Ansprüche, **dadurch gekennzeichnet, dass** die vorbestimmte minimale Zeitdifferenz (5) einen Monat, bevorzugt zwei Wochen, weiter bevorzugt eine Woche und weiter bevorzugt drei Tage beträgt.

11. Verfahren nach einem der vorangehenden Ansprüche, **dadurch gekennzeichnet, dass** eine Beschädigungsmeldung initiiert wird bei einem mehrfachen Vorkommen der Zeitdifferenz, wobei die Zeitspanne zwischen den Zeitdifferenzen kleiner als drei Monate, bevorzugt kleiner als zwei Monate, weiter bevorzugt kleiner als einen Monat und weiter bevorzugt kleiner als zwei Wochen ist.

12. Verfahren nach einem der vorangehenden Ansprüche, **dadurch gekennzeichnet, dass** die Beschädigungsmeldung automatisiert an einen Flottenbetreiber und/oder einen Fahrzeughalter ausgegeben wird.

13. Verfahren nach einem der vorangehenden Ansprüche, **dadurch gekennzeichnet, dass** die Häufigkeit der Warnmeldungen des Fahrzeugreifens mit der Häufigkeit der Warnmeldungen von weiteren Fahrzeugreifen des gleichen Fahrzeuges verglichen werden, wobei bei einer Abweichung der Häufigkeiten um mehr als den Faktor 5, bevorzugt um mehr als den Faktor 3, weiter bevorzugt um mehr als den Faktor 2 und weiter bevorzugt um mehr als den Faktor 1,5 eine Beschädigungsmeldung initiiert wird.

14. Vorrichtung zum Ausführen des Verfahrens nach Anspruch 1 aufweisend:
- ein Reifendruckkontrollsystem zum Ermitteln von Reifendruckwerten,
- eine Speichereinheit zum Speichern von Zeitpunkten,
- eine Sendeeinheit,
- eine Recheneinheit zum Ermitteln einer Beschädigung an einem Fahrzeugreifen.

## Claims

1. Method for detecting damage to a vehicle tyre, having at least the following steps:
a) recording individual tyre pressure values (1) of the vehicle tyre using a tyre pressure sensor,
b) comparing the tyre pressure value (1) with a lower threshold value (2),
c) initiating a warning notification if one of the tyre pressure values (1) falls below the lower threshold value (2), **characterized in that** the time at which the warning notification is initiated or an upper threshold value (11) is exceeded is stored as a first time (3) in a data memory, wherein a second time (4) is subsequently recorded due to one of the tyre pressure values (1) of the vehicle tyre falling below a lower threshold value (2), and is compared with the first time (3), wherein a damage notification is initiated if a comparison of the first time (3) with the second time (4) results in a time difference that is less than a predetermined minimum time difference (5).

2. Method according to Claim 1, **characterized in that** a damage notification is not output as long as the tyre pressure value (1) has not exceeded the upper threshold value (11) after the first time (3).

3. Method according to Claim 1 or 2, **characterized in that** a vehicle tyre temperature is recorded and temperature compensation of the tyre pressure value (1) is carried out.

4. Method according to one of the preceding claims, **characterized in that** the first time (3) is stored in a data memory located on a vehicle, preferably in the vehicle tyre.

5. Method according to one of the preceding claims, **characterized in that** the first time (3) is stored in a central data memory outside of the vehicle.

6. Method according to one of the preceding claims, **characterized in that** the first time (3) is compared with the second time (4) and/or the damage notification is initiated at the vehicle, preferably on a tyre pressure monitoring system located in the vehicle tyre.

7. Method according to one of Claims 1 to 5, **characterized in that** the first time (3) is compared with the second time (4) and the damage notification is initiated on a central computer.

8. Method according to one of the preceding claims, **characterized in that** the first time (3) and the second time (4) and/or the warning notifications and damage notifications are output from the tyre pressure sensor to a control device of the vehicle in a wireless manner, preferably by means of radio transmission, more preferably by means of Bluetooth.

9. Method according to one of Claims 1 to 7, **characterized in that** the first time (3) and the second time (4) and/or the warning notifications and damage notifications are output from the tyre pressure sensor to a central computer in a wireless manner, preferably via a mobile radio network.

10. Method according to one of the preceding claims, **characterized in that** the predetermined minimum time difference (5) is one month, preferably two weeks, more preferably one week, and more preferably three days.

11. Method according to one of the preceding claims, **characterized in that** a damage notification is initiated if the time difference occurs multiple times, wherein the time period between the time differences is less than three months, preferably less than two months, more preferably less than one month and more preferably less than two weeks.

12. Method according to one of the preceding claims, **characterized in that** the damage notification is automatically output to a fleet operator and/or a vehicle owner.

13. Method according to one of the preceding claims, **characterized in that** the frequency of the warning notifications of the vehicle tyre is compared with the frequency of the warning notifications of other vehicle tyres of the same vehicle, wherein a damage notification is initiated if the frequencies differ by more than a factor of 5, preferably by more than a factor of 3, more preferably by more than a factor of 2, and more preferably by more than a factor of 1.5.

14. Apparatus for carrying out the method according to Claim 1, having:
- a tyre pressure monitoring system for ascertaining tyre pressure values,
- a memory unit for storing times,
- a transmitting unit,
- a computing unit for ascertaining damage to a vehicle tyre.

## Revendications

1. Procédé de détection d'un endommagement sur un pneu de véhicule, avec au moins les étapes suivantes :
a) la détection de valeurs de pression de pneu individuelles (1) du pneu de véhicule avec un capteur de pression de pneu,
b) la comparaison de la valeur de pression de pneu (1) à une valeur de seuil inférieure (2),
c) le lancement d'un message d'avertissement lorsque l'une des valeurs de pression de pneu (1) tombe en dessous de la valeur de seuil inférieure (2), **caractérisé en ce que** le moment du lancement du message d'avertissement ou du dépassement d'une valeur de seuil supérieure (11) est enregistré comme un premier moment (3) dans une mémoire de données, un deuxième moment (4) étant ensuite détecté, en raison de la chute de l'une des valeurs de pression de pneu (1) du pneu du véhicule en dessous d'une valeur de seuil inférieure (2), et étant comparé au premier moment (3), un message d'endommagement étant lancé si une comparaison du premier moment (3) avec le deuxième moment (4) donne une différence de temps inférieure à une différence de temps minimale prédéterminée (5).

2. Procédé selon la revendication 1, **caractérisé en ce qu'**aucun message d'endommagement n'est émis dans la mesure où la valeur de pression de pneu (1) n'a pas dépassé la valeur de seuil supérieure (11) après le premier moment (3).

3. Procédé selon la revendication 1 ou 2, **caractérisé en ce qu'**une température de pneu de véhicule est détectée et une compensation de température de la valeur de pression de pneu (1) est effectuée.

4. Procédé selon l'une quelconque des revendications précédentes, **caractérisé en ce que** le premier moment (3) est enregistré sur une mémoire de données se trouvant sur un véhicule, de préférence dans le pneu de véhicule.

5. Procédé selon l'une quelconque des revendications précédentes, **caractérisé en ce que** le premier moment (3) est enregistré sur une mémoire de données centrale extérieure au véhicule.

6. Procédé selon l'une quelconque des revendications précédentes, **caractérisé en ce que** la comparaison du premier moment (3) avec le deuxième moment (4) et/ou le lancement du message d'endommagement est effectué sur le véhicule, de préférence sur un système de contrôle de pression de pneu se trouvant dans le pneu de véhicule.

7. Procédé selon l'une quelconque des revendications 1 à 5, **caractérisé en ce que** la comparaison du premier moment (3) avec le deuxième moment (4) et le lancement du message d'endommagement sont effectués sur un ordinateur central.

8. Procédé selon l'une quelconque des revendications précédentes, **caractérisé en ce que** le premier moment (3) et le deuxième moment (4) et/ou les messages d'avertissement et les messages d'endommagement sont émis par le capteur de pression de pneu sans fil, de préférence par transmission radio, de préférence encore par Bluetooth, vers un appareil de commande du véhicule.

9. Procédé selon l'une quelconque des revendications 1 à 7, **caractérisé en ce que** le premier moment (3) et le deuxième moment (4) et/ou les messages d'avertissement et les messages d'endommagement sont émis par le capteur de pression de pneu sans fil, de préférence via un réseau de téléphonie mobile, vers un ordinateur central.

10. Procédé selon l'une quelconque des revendications précédentes, **caractérisé en ce que** la différence de temps minimale prédéterminée (5) est d'un mois, de préférence de deux semaines, de préférence encore d'une semaine et de préférence encore de trois jours.

11. Procédé selon l'une quelconque des revendications précédentes, **caractérisé en ce qu'**un message d'endommagement est lancé en cas d'occurrence multiple de la différence de temps, l'intervalle de temps entre les différences de temps étant inférieur à trois mois, de préférence inférieur à deux mois, de préférence encore inférieur à un mois et de préférence encore inférieur à deux semaines.

12. Procédé selon l'une quelconque des revendications précédentes, **caractérisé en ce que** le message d'endommagement est émis de manière automatisée à un opérateur de flotte et/ou à un propriétaire de véhicule.

13. Procédé selon l'une quelconque des revendications précédentes, **caractérisé en ce que** la fréquence des messages d'avertissement du pneu de véhicule est comparée à la fréquence des messages d'avertissement d'autres pneus de véhicule du même véhicule, un message d'endommagement étant lancé en cas d'écart des fréquences de plus d'un facteur 5, de préférence de plus d'un facteur 3, de préférence encore de plus d'un facteur 2 et de préférence encore de plus d'un facteur 1,5.

14. Dispositif pour la mise en œuvre du procédé selon la revendication 1, présentant :
- un système de contrôle de pression de pneu pour déterminer des valeurs de pression de pneu,
- une unité de mémoire pour enregistrer des moments,
- une unité d'émission,
- une unité de calcul pour déterminer un endommagement sur un pneu de véhicule.
